# EUROPÄISCHE PATENTSCHRIFT

(11) **EP 3 090 612 B1**
(45) Veröffentlichungstag und Bekanntmachung des Hinweises auf die Patenterteilung: **12.07.2023**
(21) Anmeldenummer: 16401029.0
(22) Anmeldetag: 19.04.2016
(51) Int. Cl.: A01B 7/00, A01B 15/16

(54) **BODENBEARBEITUNGSSCHEIBE**
GROUND PROCESSING DISC
DISQUE DE LABOUR

(30) Priorität: 23.04.2015 DE 102015106245
(43) Veröffentlichungstag der Anmeldung: 09.11.2016
(73) Patentinhaber: Amazonen-Werke H. Dreyer SE & Co. KG, 49205 Hasbergen (DE)
(72) Erfinder: Scherf, Silvio, 39444 Hecklingen OT Cochstedt (DE)

(56) Entgegenhaltungen:
- WO-A1-2009/156536
- GB-A- 2 217 966
- US-A- 2 271 354
- US-A- 4 280 566
- US-A- 4 305 272
- US-A1- 2011 024 141

## Beschreibung

Die Erfindung betrifft eine Bodenbearbeitungsscheibe gemäß des Oberbegriffes des Patentanspruches 1.

Eine derartige Bodenbearbeitungsscheibe ist in der GB 2 217 966 A beschrieben. Eine weitere Bodenbearbeitungsscheibe ist in der US 4 305 272 beschrieben.

Diese Scheibe lässt sich bei Bodenbearbeitungsgeräten, wie eine Scheibenegge einsetzen . Derartige Bodenbearbeitungsscheiben sind mit einem Drehlager an einer Scheibenhalterung frei drehbar angeordnet. Derartige Scheiben können auch anstelle an Bodenbearbeitungsmaschinen an Sämaschinen angeordnet werden.

Durch den Eingriff der Scheiben in dem Boden und der Vorwärtsbewegung der Scheiben wird der Boden zur Seite bewegt. Hierdurch kommt es zu einem Verschleiß der Scheiben, so dass diese sowohl in ihrer Dicke wie vor allem im Durchmesser kleiner werden. Um den Verschleiß zu begrenzen werden die Scheiben aus einem hochwertigen Material gefertigt und in ihrem äußeren als Kreisring umlaufenden Bereich gehärtet, so dass der Außenumfang mit einem verschleißfesteren Material als der Innenbereich der Scheibe versehen ist gehärtet. Dieses Material ist sehr teuer.

Der Erfindung liegt die Aufgabe zu Grunde, auf preiswertere Weise eine höhere Standzeit der Scheiben durch Verringerung des Verschleißes zu erreichen.

Diese Aufgabe wird erfindungsgemäß durch das kennzeichnende Merkmal des Anspruches 1 gelöst.

Infolge dieser Maßnahme wird durch das Aufbringen des verschleißfesten Materiales im äußeren Bereich eine wesentlich höhere Standzeit der Scheiben erreicht.

Durch die Aufbringung des verschleißfesten Materials in Form eines bis an den äußeren Umfang der Schreibe rechenden Verschleißschutzringes auf dem äußeren Scheibenbereich wird der am stärksten dem Verschleiß unterliegende Bereich vor Verschleiß geschützt.

Grundsätzlich ist es bei Bodenbearbeitungswerkzeugen und Säscharen bekannt, in den in dem Boden eindringen dem Bereich der Schare ein verschleißfestes Material vorzusehen, wie dieses beispielsweise in der DE 20 2010 001 903 U1 beschrieben ist. Hierbei handelt es sich jedoch um feststehende Scharelemente, wobei auf den vorderen in dem Boden eindringenden Seiten verschleißfestes Material aufgebracht ist. Eine Anwendung des Aufbringens von verschleißfestem Material auf sich drehende Scheiben ist bisher noch nicht bekannt geworden.

Um nur so viel wie nötig an teurem verschleißfesten Material auf die Scheibe aufbringen zu müssen, ist vorgesehen, dass der innere Durchmesser des Verschleißschutzringes nicht größer als 0,75 des Durchmesser der Scheibe ist und sich bis zum äußeren Rand der Scheibe erstreckt. Durch diese Angabe der Breite des Verschleißschutzringes wird der am stärksten durch Verschleiß gefährdete Bereich der Scheibe ausreichend geschützt.

Als vorteilhaft hat sich bei schräg zur Fahrtrichtung angestellten Scheiben herausgestellt, dass der Verschleißschutzring den äußeren Seitenrandbereich und den äußeren umlaufenden Umfangsbereich L-förmig umgreift. Durch eine derartige Anbringung wird der am stärksten durch Verschleiß gefährdete Bereich geschützt.

Eine Verbesserung der Befestigung des verschleißfesten Materials an der Scheibe kann dadurch erreicht werden, dass der Verschleißschutzring den äußeren Seitenrandbereich, den inneren äußeren Seitenrandbereich und den äußeren umlaufenden Umfangsbereich U-förmig umgreift.

Als vorteilhaft hat sich bei Scheiben, die in oder zumindest annähernd in Fahrtrichtung angestellt, herausgestellt, dass der Verschleißschutzring den die beiden Seitenrandbereiche und den äußeren umlaufenden Umfangsbereich U-förmig umgreift.

Erfindungsgemäß ist vorgesehen, dass das Verschleißschutzmaterial durch PTA-Auftragsschweißen, Laserauftragsverfahren, Flammenspritzverfahren, etc. auf die Scheibe aufgebracht ist.

In einer anderen Ausführungsform ist vorgesehen, dass der Verschleißschutz an der Scheibe befestigte Hartmetallplatten sind.

Die Grundidee bei dieser Erfindung besteht darin, dass auf einem weicheren, stark dem Verschleiß unterliegenden Grundkörper ein verschleißfestes Material aufgebracht wird. Somit wird das teure verschleißfeste Material nur auf den unbedingt nötigen Bereich, der die Scheibe vor Verschleiß schützt, aufgebracht. Somit wird in preiswerter Weise ein hoher Verschleißschutz erreicht.

Weitere Einzelheiten der Erfindung sind der Beispielsbeschreibung und den Zeichnungen zu entnehmen. Die Zeichnungen zeigen
- Fig.1: eine erfindungsgemäß mit einem Verschleißschutzring versehene Bodenbearbeitungsscheibe eines Bodenbearbeitungsgerätes oder Sämaschine in der Ansicht von schräg hinten,
- Fig.2: die Bodenbearbeitungsscheibe nach Fig.1 in der Ansicht II - II,
- Fig.3: die Bodenbearbeitungsscheibe nach Fig.1 in der Ansicht III - III,
- Fig.4: eine weitere erfindungsgemäß mit einem Verschleißschutzring versehene Bodenbearbeitungsscheibe eines Bodenbearbeitungsgerätes oder Sämaschine in der Ansicht gemäß Fig.1,
- Fig.5: die Bodenbearbeitungsscheibe nach Fig.4 in der Ansicht gemäß Fig.2,
- Fig.6: die Bodenbearbeitungsscheibe nach Fig.4 in der Ansicht gemäß Fig.3,
- Fig.7: eine weitere erfindungsgemäß mit einem Verschleißschutzring versehene Bodenbearbeitungsscheibe eines Bodenbearbeitungsgerätes oder Sämaschine in der Ansicht gemäß Fig.1,
- Fig.8: die Bodenbearbeitungsscheibe nach Fig.7 in der Ansicht von hinten und rechtwinklig zur Scheibenebene mit einer ersten Ausgestaltung des Verschleißringes,
- Fig.9: die Bodenbearbeitungsscheibe nach Fig.7 in der Ansicht von hinten und rechtwinklig zur Scheibenebene mit einer weiteren Ausgestaltung des Verschleißringes und
- Fig.10: die Bodenbearbeitungsscheibe nach Fig.7 in der Ansicht von hinten und rechtwinklig zur Scheibenebene mit einer weiteren Ausgestaltung des Verschleißringes.

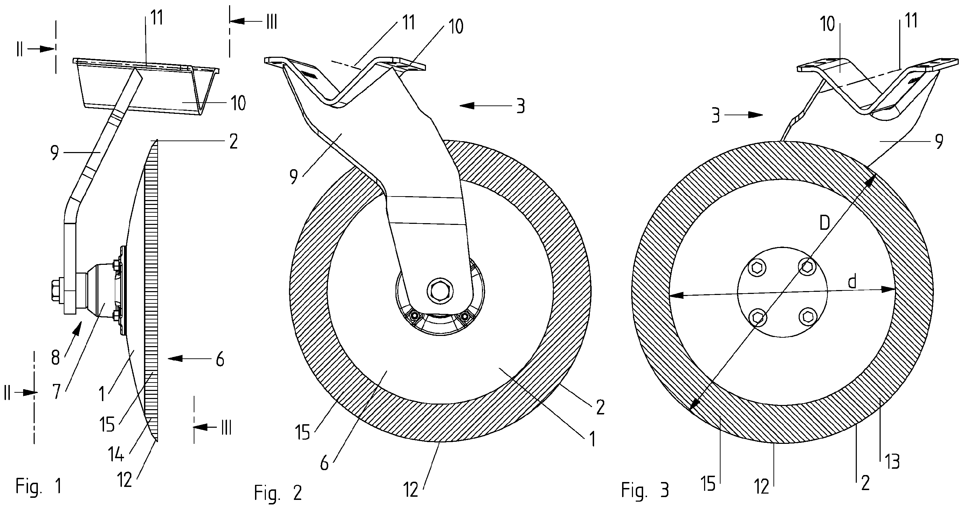

Die Bodenbearbeitungsscheibe 1 gemäß den Fig.1 bis 3 ist mit einem geschlossenen kreisrunden Außenumfang 2 ausgebildet und zur Fahrtrichtung 3 und zur Aufrechten 5 mit jeweils einem Winkel angestellt. Des Weiteren ist die Scheibe 1 als Hohlscheibe ausgebildet und so angestellt, dass die konkaven Seite 6 der Scheibe 1 der Fahrtrichtung 3 zugewandt ist.

Die Bodenbearbeitungsscheibe 1 ist mit einer Nabe 7 an einer Drehlagerung 8 des Haltearmes 9 frei drehbar gelagert und über die Gelenkschelle 10 an einen nicht dargestellten Querbalken eines Bodenbearbeitungsgerätes und/der-maschine und/oder einer Sämaschine um eine horizontale Achse 11 vorzugsweise federnd gelenkig befestigt. Hierbei sind mehrere Bodenbearbeitungsscheiben 1 nebeneinander und in zumindest zwei Querreihen hintereinander angeordnet, wobei die Bodenbearbeitungsscheiben 1 in der ein Querreihe entgegengesetzt schräg zu den Scheiben 1 der anderen Querreihe angestellt sind.

Der umlaufende äußere Randbereich 12 und die Seitenrandbereiche 13, 14 der Scheibe 1 sind im Ausführungsbeispiel auf allen den am stärksten dem Verschleiß unterliegenden Seiten und dem umlaufenden Außenumfang der Scheibe 1 mit einem verschleißfesten Material versehen, welches in den Zeichnungen als schraffierte Flächen 15 dargestellt sind. Dieses verschleißfeste Material 15 ist in Form eines bis an den äußeren Umfang 2 der Scheibe 1 reichenden Verschleißschutzring 15 auf den äußeren Scheibenbereichen 13, 14 aufgebracht. Hierbei ist der innere Durchmesser d des Verschleißschutzringes 15 nicht größer als 0,75 des Durchmessers D der Scheibe und erstreckt sich bis zum äußeren Rand 2 der Scheibe 1. In diesem Ausführungsbeispiel ist der Verschleißschutzring 15 als die beiden Seitenrandbereiche 13, 15 und den äußeren umlaufenden Umfangsbereich 12 U-förmig umgreifend ausgestaltet. Das Verschleißschutzmaterial 15 kann durch PTA-Auftragsschweißen, Laserauftragsverfahren, Flammenspritzverfahren, etc. auf die Scheibe 1 aufgebracht sein. Alternativ kann der Verschleißschutz 15 an der Scheibe 1 auch als an der Scheibe befestigte Hartmetallplatten ausgebildet sein.

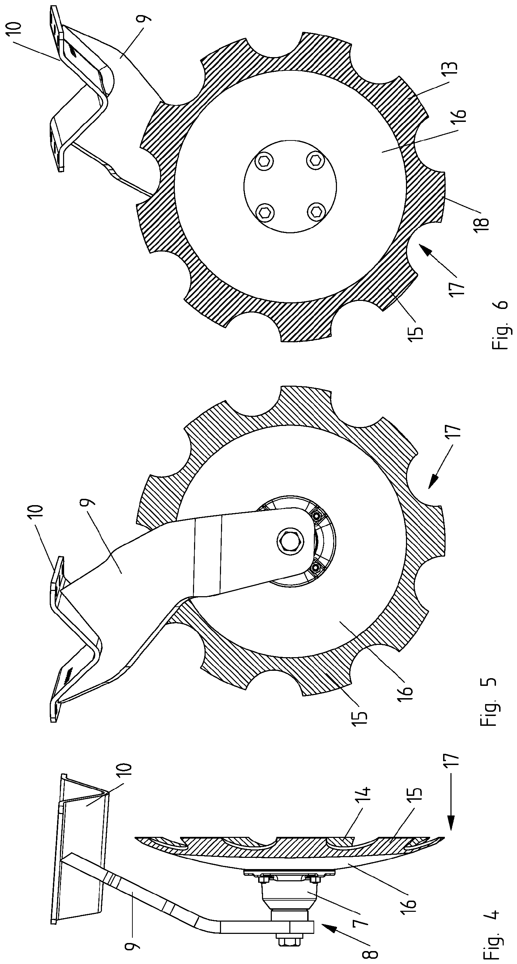

Die Ausgestaltung der Bodenbearbeitungsscheibe 16 gemäß den Fig.4-6 unterscheidet sich von der Ausgestaltung der Bodenbearbeitungsscheibe 1 gemäß den Fig. 1-3 dadurch, dass die Bodenbearbeitungsscheibe 16 in ihrem Außenbereich 17 gezahlt und/oder gezackt ausgestaltet ist. Auch hier ist der umlaufende äußere Randbereich 18 und Seitenrandbereich 13, 14 der Scheibe 1 ist im Ausführungsbeispiel auf allen den am stärksten dem Verschleiß unterliegenden Seiten und dem umlaufenden Außenumfang der Scheibe 1 mit einem verschleißfesten Material versehen, welches in den Zeichnungen als schraffierte Fläche 15 dargestellt ist. Dieses verschleißfeste Material 15 ist in Form eines bis an den äußeren Umfang 18 der Scheibe 1 reichenden Verschleißschutzring 15 auf den äußeren Scheibenbereich 13, 14 aufgebracht. Bezüglich der weiteren Ausgestaltung wird auf die vorstehenden Ausführungen verwiesen.

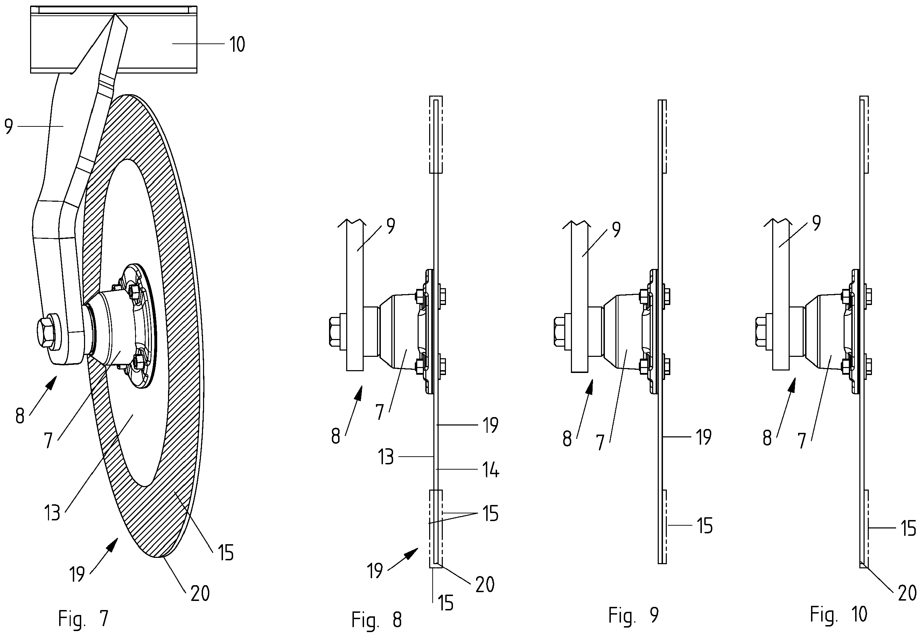

Die Ausgestaltung der Bodenbearbeitungsscheibe 19 gemäß den Fig.7-10 unterscheidet sich von der Ausgestaltung der Bodenbearbeitungsscheibe 1 gemäß den Fig. 1-3 zunächst dadurch, dass die Bodenbearbeitungsscheibe 19 als plane und ebene Scheibe ausgestaltet ist. Der umlaufende äußere Randbereich 20 und Seitenrandbereich 13, 14 der Scheibe 19 ist im Ausführungsbeispiel gemäß der Fig. 7 und 8 auf allen den am stärksten dem Verschleiß unterliegenden Seiten 13,14 und dem umlaufenden Außenumfang 20 der Scheibe 29 mit einem verschleißfesten Material 15 versehen, welches in den Zeichnungen als schraffierte Fläche 15 dargestellt ist. In diesem Falle umgreift der Verschleißschutzring 15 die beiden Seitenrandbereiche und den äußeren umlaufenden Umfangsbereich U-förmig, wie insbesondere der Fig.8 zu entnehmen ist.

Die Ausgestaltung der Bodenbearbeitungsscheibe 19 gemäß den Fig.9 unterscheidet sich von der Ausgestaltung der Bodenbearbeitungsscheibe 19 gemäß den Fig.7 und 8 dadurch, dass der Verschleißschutzring 15 nur auf einer Seite der Bodenbearbeitungsscheibe aufgebracht ist.

Die Ausgestaltung der Bodenbearbeitungsscheibe gemäß den Fig. 10 unterscheidet sich von der Ausgestaltung der Bodenbearbeitungsscheibe 19 gemäß den Fig.7 und 8 dadurch, dass der Verschleißschutzring 15 nur den einen äußeren Seitenrandbereich und den äußeren umlaufenden Umfangsbereich L-förmig umgreift, wie die Zeichnung zeigt.

## Patentansprüche

1. Bodenbearbeitungsscheibe (1, 16, 19) insbesondere für landwirtschaftliche Maschinen, wie Bodenbearbeitungs- und/oder Sämaschinen, die vorzugsweise frei drehbar an Scheibenhalterungen (9) mittels Drehlager (8) gelagert ist und einen kreisrunden und/oder gezahnten Außenumfang (12, 18, 20) aufweist, wobei der umlaufende äußere Randbereich (12, 18, 20) und/oder Seitenrandbereich (13, 14) der Scheibe (1, 16, 19) zumindest auf der am stärksten dem Verschleiß unterliegenden Seite und/oder dem umlaufenden Außenumfang der Scheibe (1, 16, 19) mit einem verschleißfesten Material (15) versehen ist, wobei die Bodenbearbeitungsscheibe (1, 16, 19) einen Grundkörper aufweist, der weicher ist als das verschleißfeste Material, wobei auf dem Grundkörper das verschleißfeste Material in Form eines bis an den äußeren Umfang der Scheibe reichenden Verschleißschutzringes (15) auf dem äußeren Scheibenbereich aufgebracht ist, **dadurch gekennzeichnet, dass** das Verschleißschutzmaterial (15) durch PTA-Auftragsschweißen, Laserauftragsverfahren, Flammenspritzverfahren auf die Scheibe (1, 16, 19) aufgebracht ist.

2. Bodenbearbeitungsscheibe nach Anspruch 1, **dadurch gekennzeichnet, dass** der innere Durchmesser (d) des Verschleißschutzringes (15) nicht größer als 0,75 des Durchmesser (D) der Scheibe (1, 16, 19) ist und sich bis zum äußeren Rand (12, 18, 20) der Scheibe (1, 16, 19) erstreckt.

3. Bodenbearbeitungsscheibe nach zumindest einem der vorstehenden Ansprüche, **dadurch gekennzeichnet, dass** der Verschleißschutzring (15)den äußeren Seitenrandbereich (14) und den äußeren umlaufenden Umfangsbereich (20) L-förmig umgreift.

4. Bodenbearbeitungsscheibe nach zumindest einem der vorstehenden Ansprüche, **dadurch gekennzeichnet, dass** der Verschleißschutzring (15) den äußeren Seitenrandbereich (13, 14), den inneren äußeren Seitenrandbereich (20) und den äußeren umlaufenden Umfangsbereich U-förmig umgreift.

5. Bodenbearbeitungsscheibe nach zumindest einem der vorstehenden Ansprüche, **dadurch gekennzeichnet, dass** der Verschleißschutzring (15) den die beiden Seitenrandbereiche (13, 14) und den äußeren umlaufenden Umfangsbereich (20) U-förmig umgreift.

6. Bodenbearbeitungsscheibe nach zumindest einem der vorstehenden Ansprüche 1 bis 5, **dadurch gekennzeichnet, dass** der Verschleißschutz (15) an der Scheibe (1, 16, 19) befestigte Hartmetallplatten sind.

## Claims

1. Soil-working disk (1, 16, 19), in particular for agricultural machines, such as soil-working and/or sowing machines, which is preferably mounted so as to be freely rotatable on disk holders (9) by means of rotary bearings (8) and has a circular and/or toothed outer circumference (12, 18, 20), the continuous outer edge region (12, 18, 20) and/or lateral edge region (13, 14) of the disk (1, 16, 19) being provided with a wear-resistant material (15) at least on the side which is most intensely subjected to wear and/or on the continuous outer circumference of the disk (1, 16, 19), the soil-working disk (1, 16, 19) having a main body which is softer than the wear-resistant material, on the main body the wear-resistant material being applied to the outer disk region in the form of a wear-protection ring (15) which extends to the outer circumference of the disk,
**characterized in that** the wear-protection material (15) is applied to the disk (1, 16, 19) by PTA application welding, laser application methods, flame spraying methods.

2. Soil-working disk according to claim 1, **characterized in that** the inner diameter (d) of the wear-protection ring (15) is not greater than 0.75 of the diameter (D) of the disk (1, 16, 19) and extends up to the outer edge (12, 18, 20) of the disk (1, 16, 19).

3. Soil-working disk according to at least one of the preceding claims, **characterized in that** the wear-protection ring (15) surrounds the outer lateral edge region (14) and the outer continuous circumferential region (20) in an L-shaped manner.

4. Soil-working disk according to at least one of the preceding claims, **characterized in that** the wear-protection ring (15) surrounds the outer lateral edge region (13, 14), the inner outer lateral edge region (20) and the outer continuous circumferential region in a U-shaped manner.

5. Soil-working disk according to at least one of the preceding claims, **characterized in that** the wear-protection ring (15) surrounds the two lateral edge regions (13, 14) and the outer continuous circumferential region (20) in a U-shaped manner.

6. Soil-working disk according to at least one of the preceding claims 1 to 5, **characterized in that** the wear protection (15) are hard metal plates fastened to the disk (1, 16, 19).

## Revendications

1. Disque de travail du sol (1, 16, 19) en particulier pour des machines agricoles, telles que machines de travail du sol et/ou semoirs, qui est monté de préférence libre en rotation sur des supports de disque (9) au moyen de paliers pivotants (8) et présente une circonférence extérieure (12, 18, 20) circulaire et/ou dentée, la zone de bord extérieure (12, 18, 20) périphérique et/ou la zone de bord latérale (13, 14) du disque (1, 16, 19) étant munie au moins sur le côté soumis le plus à l'usure et/ou sur la circonférence extérieure périphérique du disque (1, 16, 19) d'un matériau résistant à l'usure (15), le disque de travail du sol (1, 16, 19) présentant un corps de base, qui est plus souple que le matériau résistant à l'usure, le matériau résistant à l'usure étant appliqué sur la zone de disque extérieure sur le corps de base sous la forme d'un anneau de protection contre l'usure (15) s'étendant jusqu'à la circonférence extérieure du disque,
**caractérisé en ce que** le matériau résistant à l'usure (15) est appliqué par soudage au plasma à arc transféré, procédé de rechargement au laser, procédé de pulvérisation à la flamme sur le disque (1, 16, 19).

2. Disque de travail du sol selon la revendication 1, **caractérisé en ce que** le diamètre intérieur (d) de l'anneau de protection contre l'usure (15) n'est pas supérieur à 0,75 du diamètre (D) du disque (1, 16, 19) et s'étend jusqu'au bord extérieur (12, 18, 20) du disque (1, 16, 19).

3. Disque de travail du sol selon au moins une des revendications précédentes, **caractérisé en ce que** l'anneau de protection contre l'usure (15) entoure en forme de L la zone de bord latérale (14) extérieure et la zone circonférentielle (20) périphérique extérieure.

4. Disque de travail du sol selon au moins une des revendications précédentes, **caractérisé en ce que** l'anneau de protection contre l'usure (15) entoure en forme de U la zone de bord latérale (13, 14) extérieure, la zone de bord latérale extérieure intérieure (20) et la zone circonférentielle périphérique extérieure.

5. Disque de travail du sol selon au moins une des revendications précédentes, **caractérisé en ce que** l'anneau de protection contre l'usure (15) entoure en forme de U les deux zones de bord latérales (13, 14) et la zone circonférentielle (20) périphérique extérieure.

6. Disque de travail du sol selon au moins une des revendications précédentes 1 à 5, **caractérisé en ce que** la protection contre l'usure (15) est constituée de plaques de métal dur fixées au disque (1, 16, 19).
